# EUROPEAN PATENT APPLICATION

(11) **EP 4 629 328 A1**
(43) Date of publication of application: **08.10.2025**
(21) Application number: 24849595.4
(22) Date of filing: 31.07.2024
(51) Int. Cl.: H01M 4/36, H01M 4/587, H01M 4/583, H01M 4/134, H01M 4/133, H01M 4/62, H01M 10/052, H01M 4/02

(54) **NEGATIVE ELECTRODE COMPOSITION, NEGATIVE ELECTRODE, AND LITHIUM SECONDARY BATTERY**

(30) Priority: 31.07.2023 KR 20230099452; 30.07.2024 KR 20240100913
(71) Applicant: LG Energy Solution, Ltd., Seoul 07335 (KR)
(72) Inventor: KIM, Taeho, Daejeon 34122 (KR); LEE, Seunggwan, Daejeon 34122 (KR); SHIN, Sun Young, Daejeon 34122 (KR); LEE, Yong Ju, Daejeon 34122 (KR)
(74) Representative: Hoffmann Eitle
(86) International application number: PCT/KR2024/011194
(87) International publication number: WO 2025/029028

(57) **Abstract**

The present invention relates to a negative electrode composition, a negative electrode comprising same, a lithium secondary battery, a battery module, and a battery pack, the negative electrode composition comprising a negative electrode active material comprising a carbon-based active material and a silicon-based active material including at least one among a silicon carbon composite and a silicon oxide, wherein the carbon-based active material includes natural graphite and artificial graphite, and when powder resistance is measured at a pressure of 800 kgf/cm2, rolling density decreases in the order of the natural graphite > the artificial graphite > the silicon-based active material, and electrical conductivity decreases in the order of the natural graphite > the artificial graphite > the silicon-based active material.

## Description

### [Technical Field]

This application claims priority to and the benefit of Korean Patent Application No. 10-2023-0099452 filed in the Korean Intellectual Property Office on July 31, 2023, and Korean Patent Application No. 10-2024-0100913 filed in the Korean Intellectual Property Office on July 30, 2024, the entire contents of which are incorporated herein by reference.

The present application relates to a negative electrode composition, a negative electrode, and a lithium secondary battery.

### [Background Art]

Recently, with the rapid spread of electronic devices using batteries, such as mobile phones, laptop computers, electric vehicles, electrically-powered tools and cleaners, the demand for small, lightweight, and relatively high-capacity and/or high-output secondary batteries is rapidly increasing. In particular, a lithium secondary battery is in the limelight as a driving power source for electronic devices because it is lightweight and has a high energy density. Accordingly, research and development efforts to improve the performance of the lithium secondary battery are being actively conducted.

In general, a lithium secondary battery includes a positive electrode, a negative electrode, a separator interposed between the positive electrode and the negative electrode, an electrolyte, an organic solvent, and the like. In addition, the positive electrode and the negative electrode may be formed on current collectors with active material layers each including a positive electrode active material and a negative electrode active material. In general, for the positive electrode, a lithium-containing metal oxide such as LiCoO₂ and LiMn₂O₄ is used as the positive electrode active material, and for the negative electrode, a carbon-based active material or a silicon-based active material that does not contain lithium is used as the negative electrode active material.

Among the negative electrode active materials, the silicon-based active material has attracted attention in that it has higher capacity than the carbon-based active material and excellent high-speed charge characteristics. However, the silicon-based active material has disadvantages in that a degree of volume expansion/contraction during charging and discharging is high, an irreversible capacity is high, and therefore, the initial efficiency is low. Therefore, silicon-based active materials have the disadvantage of deteriorating battery performance compared to carbon-based active materials.

Accordingly, there is a need to develop a negative electrode material that can improve performance of lithium secondary batteries.

### [Detailed Description of the Invention]

### [Technical Problem]

The present invention relates to a negative electrode composition that can improve performance of lithium secondary batteries, a negative electrode including the negative electrode composition, and a secondary battery including the negative electrode.

### [Technical Solution]

An exemplary embodiment of the present invention provides a negative electrode composition including a negative electrode active material including a silicon-based active material and a carbon-based active material, the silicon-based active material including at least one of a silicon-carbon composite and a silicon oxide, wherein the carbon-based active material includes natural graphite and artificial graphite, and when measuring a powder resistance at a pressure of 800 kgf/cm², a rolling density decreases in order of natural graphite > artificial graphite > silicon-based active material, and an electrical conductivity decreases in order of natural graphite > artificial graphite > silicon-based active material.

In addition, according to an exemplary embodiment of the present invention, the negative electrode composition of the above-described exemplary embodiment includes a single-walled carbon nanotube as a conductive material.

An exemplary embodiment of the present invention provides a negative electrode including the negative electrode composition according to the exemplary embodiments described above.

An exemplary embodiment of the present invention provides a lithium secondary battery including the negative electrode according to the above-described exemplary embodiment, a positive electrode, and a separator.

An exemplary embodiment of the present invention provides a battery module including the lithium secondary battery according to the exemplary embodiment described above.

An exemplary embodiment of the present invention provides a battery pack including the lithium secondary battery according to the exemplary embodiment described above.

An exemplary embodiment of the present invention provides a battery pack including the battery module according to the exemplary embodiment described above.

### [Advantageous Effects]

According to exemplary embodiments of the present invention, a silicon-based active material and a carbon-based active material having different rolling densities and different electrical conductivities are mixed and used as a negative electrode active material, making it possible to improve the performance of a lithium secondary battery. In particular, two types of carbon-based active materials, which have higher rolling densities and electrical conductivities at the same pressure than those of silicon-based active materials and have different rolling densities and electrical conductivities, are mixed, making it possible to improve cycle characteristics and resistance of a lithium secondary battery.

### [Best Mode]

Hereinafter, the present invention will be described in more detail for better understanding of the present invention. The present invention can be variously implemented and is not limited to the following embodiments. The terms or words used throughout the specification and the claims should not be construed as being limited to their ordinary or dictionary meanings, but construed as having meanings and concepts consistent with the technical idea of the present invention, based on the principle that an inventor may properly define the concepts of the words or terms to best explain the invention.

It will be further understood that the terms "comprises", "includes" or "have" when used in the present specification specify the presence of stated features, integers, steps, constitutional elements and/or combinations thereof, but do not preclude the presence or addition of one or more other features, integers, steps, constitutional elements, and/or combinations thereof.

Further, it will be understood that when an element such as a layer is referred to as being "on" another element, it can be "directly on" the other element or an intervening element may also be present. In contrast, when an element is referred to as being "directly on" another element, there are no intervening elements present. Further, when an element is referred to as being "above" or "on" a reference portion, the element is positioned above or below the reference portion, and it does not necessarily mean that the element is positioned "above" or "on" in a direction opposite to gravity.

It should be understood that the terms or words used throughout the specification should not be construed as being limited to their ordinary or dictionary meanings, but construed as having meanings and concepts consistent with the technical idea of the present invention, based on the principle that an inventor may properly define the concepts of the words or terms to best explain the invention.

As used herein, the singular forms "a", "an" and "the" are intended to include the plural forms as well, unless the context clearly indicates otherwise.

In the present specification, the rolling density refers to the degree of deformation and compression of particles that occurs when a certain level of pressure is applied to a negative electrode active material and can be expressed in g/cc. The rolling density can be derived by measuring the powder resistance. For example, the rolling density can be measured by putting a certain amount of negative electrode active material into a cylinder-type load cell and applying any pressure ranging from 400 kgf/cm² to 2,000 kgf/cm² to cause a change in thickness of the put negative electrode active material.

In the present specification, the electrical conductivity refers to an electrical conductivity specific to the negative electrode active material powder. The electrical conductivity can be derived by measuring the powder resistance. For example, the electrical conductivity can be derived through surface resistance and specific resistance values obtained by measuring a surface resistance under varying pressure while applying any pressure ranging from 400 kgf/cm² to 2,000 kgf/cm², and measuring a surface resistance and a specific resistance using a volume and a mass measured simultaneously.

Considering an influence of particle deformation that may occur when pressed with excessive high force, for example, pressure exceeding 2000 kgf/cm² when measuring a powder resistance, it is preferable to use the rolling density value and electrical conductivity value derived from the powder resistance measurement under pressure within the above range, preferably, pressure of 800 kgf/cm².

Hereinafter, preferred embodiments of the present invention will be described in detail. However, it should be understood that the exemplary embodiments of the present invention may be modified in various forms and the scope of the present invention is not limited to the exemplary embodiments described below.

A negative electrode composition according to an exemplary embodiment of the present invention includes a negative electrode active material including a silicon-based active material, which includes at least one of a silicon-carbon composite and a silicon oxide, and a carbon-based active material, and the carbon-based active material includes natural graphite and artificial graphite. Here, the negative electrode composition has a feature that when measuring a powder resistance at a pressure of 800 kgf/cm², a rolling density decreases in order of natural graphite > artificial graphite > silicon-based active material, and an electrical conductivity decreases in order of natural graphite > artificial graphite > silicon-based active material.

According to the exemplary embodiment, the silicon-based active material and the carbon-based active material, which has higher rolling density and electrical conductivity compared to the silicon-based active material when measuring a powder resistance at a pressure of 800 kgf/cm², are included together, making it possible to improve cycle characteristics and resistance of a lithium secondary battery. In addition, as the carbon-based active material, artificial graphite is mixed and used with natural graphite, which has relatively high rolling density and electrical conductivity when measuring a powder resistance at a pressure of 800 kgf/cm², making it possible to improve the performance of a lithium secondary battery. By mixing and using a negative electrode active material with relatively high electrical conductivity, charging and discharging of lithium can be performed easier due to the high electrical conductivity even though surface detachment between the negative electrode active material and the conductive material occurs due to volume changes during charging and discharging. This makes it possible to implement characteristics of a long-life battery. Note that in the case of active materials with a relatively high rolling density, the volume changes during charging and discharging can be physically controlled, which can have a beneficial effect on cycle performance.

In the negative electrode composition according to an exemplary embodiment of the present invention, even when the condition that the rolling density of each material decreases in the order of natural graphite > artificial graphite > silicon-based active material is satisfied, if the electrical conductivity of each material does not satisfy the order of natural graphite > artificial graphite > silicon-based active material, a phenomenon may occur in which the electrical conductivity tendency is reversed because an inside surface with low electrical conductivity is exposed as the particle breaks. For example, this corresponds to a case in which the electrical conductivity is in order of artificial graphite > natural graphite > silicon-based active material.

Specifically, as the rolling density increases, the contact area between particles generally increases, which increases the conductivity. However, if the particles break, it can have an adverse effect on the electrical conductivity. Therefore, the rolling density and the electrical conductivity need to have the same tendency.

If the rolling density and the electrical conductivity do not have the same tendency, particle breakage may occur, which may adversely affect battery performance.

In addition, if the rolling density and electrical conductivity of artificial graphite are higher than those of natural graphite, the degree of graphitization of the artificial graphite may increase, which may deteriorate battery performance.

Unless otherwise stated, the electrical conductivity in the present specification refers to the electrical conductivity of each material in a particle state, for example, before breakage of particle, and does not refer to the electrical conductivity after breakage of particle.

According to an exemplary embodiment, when measuring a powder resistance at the pressure of 800 kgf/cm², the rolling density of the artificial graphite is 1.1 times or greater than that of the silicon-based active material, and the rolling density of the natural graphite is 1.01 times or greater than that of the artificial graphite.

For example, when measuring a powder resistance at the pressure of 800 kgf/cm², the rolling density may be 1.4 to 2.5 g/cc for the natural graphite (e.g., 1.6 to 1.7 g/cc), 1.0 to 2.2 g/cc for the artificial graphite (e.g., 1.5 to 1.6 g/cc), and 0.5 to 1.8 g/cc for the silicon-based active material. Specifically, when measuring a powder resistance at the pressure of 800 kgf/cm², the rolling density of the silicon-carbon composite may be 0.5 to 1.2 g/cc, for example, 0.8 to 1.0 g/cc, and the rolling density of the silicon oxide may be 0.8 to 1.8 g/cc, for example, 1.4 to 1.5 g/cc.

According to an exemplary embodiment, when measuring a powder resistance at the pressure of 800 kgf/cm², the electrical conductivity of the artificial graphite is 100 times or greater than that of the silicon-based active material, and the electrical conductivity of the natural graphite is 2 times or greater than that of the artificial graphite.

For example, when measuring a powder resistance at the pressure of 800 kgf/cm², the electrical conductivity may be 0.0001 to 2 S/cm for the silicon-based active material, 15 to 2,000 S/cm for the artificial graphite (e.g., 15 to 100 S/cm), and 50 to 10,000 S/cm for the natural graphite (e.g., 100 to 1,000 S/cm, or 100 to 500 S/cm). When measuring a powder resistance at the pressure of 800 kgf/cm², the electrical conductivity of the silicon-carbon composite may be 0.0001 to 2 S/cm, for example, 0.0001 to 0.5 S/cm, and the electrical conductivity of the silicon oxide may be 0.001 to 1 S/cm, for example, 0.01 to 0.5 S/cm.

According to an exemplary embodiment, based on 100 parts by weight of the negative electrode composition, the silicon-based active material may be included in an amount of 0.5 to 52 parts by weight, the carbon-based active material may be included in an amount of 45 to 99 parts by weight, and the single-walled carbon nanotube may be included in an amount of 0.01 to 3 parts by weight, and based on 100 parts by weight of the carbon-based active material, the natural graphite may be included in an amount of 10 to 70 parts by weight, and the artificial graphite may be included in an amount of 30 to 90 parts by weight.

According to an exemplary embodiment, the silicon-based active material may be included in an amount of 0.5 to 50 parts by weight, or 1 to 40 parts by weight, for example, 1 to 20 parts by weight, based on a total of 100 parts by weight of the negative electrode active material included in the negative electrode composition.

According to an exemplary embodiment, the carbon-based active material may be included in an amount of 60 to 99 parts by weight, for example, 80 to 99 parts by weight, based on a total of 100 parts by weight of the negative electrode active material included in the negative electrode composition. A weight ratio of the artificial graphite and the natural graphite may be 1:9 to 9:1, for example 1:9 to 3:7. For example, based on 100 parts by weight of the carbon-based active material, the natural graphite may be included in an amount of 10 to 70 parts by weight, for example, 10 to 30 parts by weight, and the artificial graphite may be included in an amount of 30 to 90 parts by weight, for example, 70 to 90 parts by weight.

According to an exemplary embodiment, the silicon-based active material may include a silicon-carbon composite, a silicon oxide, or both of them.

According to an exemplary embodiment, the silicon-carbon composite may be a Si/C-based active material.

In the present specification, the silicon-carbon composite is a composite of Si and C, and is distinguished from silicon carbide expressed as SiC. The silicon carbide does not react electrochemically with lithium, so all performance, including life, may be measured as 0.

The silicon-carbon composite may include at least one of a silicon-carbon composite formed by depositing silicon on a porous carbon structure and a silicon-carbon composite in which carbon is complexed with a porous silicon structure. The silicon-carbon composite may be a composite of silicon and graphite or the like. In the silicon-carbon composite, silicon may be nano silicon.

According to an exemplary embodiment, the silicon-carbon composite includes porous carbon-based particles and a silicon coating layer present on surfaces or in internal pores of the porous carbon-based particles.

According to an exemplary embodiment, the silicon-carbon composite may have a specific surface area of 0.5 to 10 m²/g as measured by a BET method, a pore volume of 0.005 to 0.03 cm³/g, and a pore size of 10 to 20 nm as measured by the BET method. The silicon-carbon composite may have a pore volume of 0.005 to 0.03 cm³/g as measured by a mercury penetration method (Hg porosimeter).

According to an exemplary embodiment, the silicon-carbon composite may have a D₉₀ particle diameter of 11 µm to 20 µm, a D₅₀ particle diameter of 3 µm to 10 µm, and a D₁₀ particle diameter of 0.1 µm to 3 µm.

According to an exemplary embodiment, the silicon-carbon composite may be manufactured by a method including the steps of etching carbon-based particles including internal pores to expand the internal pores of the carbon-based particles, and forming a silicon coating layer on surfaces and in the internal pores of the carbon-based particles with expanded internal pores.

The step of expanding the internal pores of the carbon-based particles may be performed in a nitrogen (N₂) atmosphere, an oxygen (O₂) atmosphere, or an air atmosphere. Specifically, a flow rate of the oxygen (O₂) or an air containing the oxygen may be controlled to 0.1 L/min to 10 L/min.

The step of expanding the internal pores of the carbon-based particles may be performed within a temperature range of from 400°C to 1200°C for 30 minutes to 4 hours.

Pore characteristics of the obtained porous carbon-based particles may vary depending on conditions for expanding the internal pores of the carbon-based particles.

The step of forming the silicon coating layer may be performed using a chemical vapor deposition method. In this case, silicon nanoparticles are deposited on the surface and/or in the internal pores of the carbon-based particles with expanded internal pores, so that a silicon coating layer in the form of a film, an island, or a combination thereof may be formed.

The silicon nanoparticles may be crystalline, quasi-crystalline, amorphous, or a combination thereof.

According to an exemplary embodiment, the silicon oxide may include SiOₓ (0≤x<2).

The active material including SiOₓ (0≤x<2) may be a silicon oxide particle including SiOₓ (0<x<2) and a pore.

The SiOₓ (0<x<2) corresponds to a matrix in the silicon oxide particle. The SiOₓ(0<x<2) may be a form of including Si and SiO₂, and the Si may form a phase. That is, x corresponds to a ratio of the number of O to Si included in the SiOₓ(0<x<2). When the silicon oxide particles include the SiOₓ (0<x<2), a discharge capacity of a secondary battery can be improved.

The silicon oxide particle may further include at least one of a Mg compound and a Li compound. The Mg compound and the Li compound may correspond to a dopant in the silicon oxide particle.

The Mg compound and/or the Li compound may be present in the SiOₓ (0<x<2) and/or on a surface of the SiOₓ (0<x<2). The initial efficiency of the battery can be improved by the Mg compound and/or the Li compound.

The Mg compound may include at least one selected from the group consisting of Mg silicate, Mg silicide, and Mg oxide. The Mg silicate may include at least one of Mg₂SiO₄ and MgSiO₃. The Mg silicide may include Mg₂Si. The Mg oxide may include MgO.

In an exemplary embodiment of the present specification, the Mg element may be included in an amount of 0.1 to 20 wt% or 0.1 to 10 wt% based on 100 wt% of a total of the silicon oxide particles. Specifically, the Mg element may be included in an amount of 0.5 to 8 wt% or 0.8 to 4 wt%. When the above range is satisfied, the Mg compound can be included in an appropriate content in the silicon oxide particles, so the volume change of the silicon oxide particles during charging and discharging of the battery can be easily suppressed, and the discharge capacity and initial efficiency of the battery can be improved.

The Li compound may include at least one selected from the group consisting of Li silicate, Li silicide, and Li oxide. The Li silicate may include at least one of Li₂SiO₃, Li₄SiO₄ and Li₂Si₂O₅. The Li silicide may include Li₇Si₂. The Li oxide may include Li₂O.

In an exemplary embodiment of the present invention, the Li compound may include a form of lithium silicate. The lithium silicate is represented by LiₐSi_{b}O_{c} (2≤a≤4, 0<b≤2, 2≤c≤5) and may be divided into crystalline lithium silicate and amorphous lithium silicate. The crystalline lithium silicate may be present in the silicon oxide particle in a form of at least one lithium silicate selected from the group consisting of Li₂SiO₃, Li₄SiO₄, and Li₂Si₂O₅, and the amorphous lithium silicate may be in a form of LiₐSi_{b}O_{c} (2≤a≤4, 0<b≤2, 2≤c≤5). However, no such limitation is intended.

In an exemplary embodiment of the present specification, the Li element may be included in an amount of 0.1 to 20 wt% or 0.1 to 10 wt% based on 100 wt% of a total of the silicon oxide particles. Specifically, the Li element may be included in an amount of 0.5 to 8 wt%, and more specifically, 0.5 to 4 wt%. When the above range is satisfied, the Li compound can be included in an appropriate content in the silicon oxide particles, so the volume change of the negative electrode active material during charging and discharging of the battery can be easily suppressed, and the discharge capacity and initial efficiency of the battery can be improved.

The content of the Mg element or Li element can be confirmed through ICP analysis. For the ICP analysis, a predetermined amount (about 0.01 g) of a negative electrode active material is precisely aliquoted, transferred to a platinum crucible, and completely decomposed on a hot plate by adding nitric acid, hydrofluoric acid and sulfuric acid thereto. Then, by using an inductively coupled plasma atomic emission spectrometer (ICP-AES, Perkin-Elmer 7300), a reference calibration curve is obtained by measuring the intensity of a standard liquid, which has been prepared using a standard solution (5 mg/kg), at an intrinsic wavelength of the Mg element or Li element. Subsequently, a pre-treated sample solution and a blank sample are introduced into the spectrometer, and by measuring the intensity of each component to calculate an actual intensity, calculating the concentration of each component based on the obtained calibration curve, and then performing a conversion such that the sum of the calculated concentrations of the components is equal to a theoretical value, the Mg element or Li element content in the prepared silicon oxide particles can be analyzed.

In an exemplary embodiment of the present specification, a carbon layer may be provided on surfaces and/or in the pores of the silicon oxide particles. Conductivity is imparted to the silicon oxide particles by the carbon layer, so that the initial efficiency, life characteristics, and battery capacity characteristics of a secondary battery including the negative electrode active material including the silicon oxide particles can be improved. A total amount of the carbon layer may be 5 to 40 wt% based on a total of 100 wt% of the silicon oxide particles.

In an exemplary embodiment of the present specification, the carbon layer may include at least one of amorphous carbon or crystalline carbon.

An average particle diameter (D₅₀) of the silicon-based active material may be 0.1 µm to 30 µm, specifically 1 µm to 20 µm, and more specifically 1 µm to 10 µm. When the above range is satisfied, the structural stability of the active material is ensured during charging and discharging, a problem that the level of volume expansion/contraction increases as the particle diameter becomes excessively large can be prevented, and a problem that the initial efficiency is reduced when the particle diameter is excessively small can also be prevented.

In the present specification, the average particle diameter (D₅₀) may be defined as a particle diameter corresponding to 50% of the cumulative volume in the particle diameter distribution curve of particles. The average particle diameter (D₅₀) may be measured using, for example, a laser diffraction method. In the laser diffraction method, in general, particle diameters ranging from a submicron region to several millimeters can be measured, and results with high reproducibility and high resolvability can be obtained. The specific surface area of the silicon-based active material may be 2 to 10 m²/g. In the present specification, the specific surface area is measured by a BET method.

According to an exemplary embodiment, the carbon-based active material includes natural graphite and artificial graphite. Natural graphite and artificial graphite each may have an average particle diameter (D₅₀) of 10 to 30 µm and a BET specific surface area of 0.5 to 2 m²/g. The natural graphite refers to graphite that occurs naturally, and examples thereof include scaled graphite, scaly graphite, or soil graphite. The natural graphite has the advantages of being abundant, being low in price, having high theoretical capacity and compaction density, and being able to realize high output.

In an example, the natural graphite may have a degree of spheroidization of 0.9 or greater.

In the present specification, the degree of spheroidization may be, when a particle is projected, a value obtained by dividing a circumference of a circle having the same area as a projected image by a circumferential length of the projected image, and specifically, can be expressed by Mathematical Formula 1 below. The degree of spheroidization may be obtained from an SEM image, or alternatively, may be measured using a particle shape analyzer, such as Sysmex FPIA3000 available from Malvern. In addition, the crystal size can be confirmed through XRD analysis. degree of spheroidization = circumference of circle having the same area as image on which particles are projected/circumferential length of projected image

The natural graphite can be applied by selecting those that satisfy the degree of spheroidization, by confirming a particle shape through SEM and verifying it using a particle shape analyzer.

In an example, the artificial graphite may have a degree of spheroidization of 0.9 or less.

The artificial graphite can be applied by selecting those that satisfy the degree of spheroidization, by confirming a particle shape through SEM and verifying it using a particle shape analyzer.

According to an exemplary embodiment of the present invention, the negative electrode composition includes a single-walled carbon nanotube (SWCNT) as a conductive material.

The single-walled carbon nanotube (SWCNT) refers to a tube-shaped carbon structure composed of a single carbon layer. When the conductive material in the negative electrode composition includes the single-walled carbon nanotube (SWCNT), the charge/discharge capacity and/or life performance of a battery can be improved. Specifically, the single-walled carbon nanotube (SWCNT) well connects a conductive path between particles, so loss of the conductive path due to swelling of the aforementioned silicon-based active material can be prevented. As a result, when the single-walled carbon nanotube (SWCNT) is included, the life performance of a battery can be improved.

In the present specification, a length of a carbon nanotube refers to a length of a major axis passing through a center of a unit of the carbon nanotube, and a diameter of a carbon nanotube refers to a length of a minor axis passing through the center of the unit and perpendicular to the major axis.

An average length of the single-walled carbon nanotube (SWCNT) may be 0.1 µm to 50 µm, specifically 0.5 µm to 25 µm or 0.5 µm to 20 µm. More specifically, the average length of the single-walled carbon nanotube (SWCNT) may be 5 µm to 15 µm. The average length of the single-walled carbon nanotube (SWCNT) can be calculated as an average value of results observed using SEM.

When single-walled carbon nanotubes (SWCNTs) are used together with the silicon-based active material and carbon-based active material described above, lengths of the carbon nanotubes equivalent to a distance between the particles of the negative electrode active material are secured, which facilitates the connection of the conductive path between the particles, thereby improving the electrical conductivity, strength, and/or electrolyte solution storage retention of the negative electrode.

An average diameter of the single-walled carbon nanotubes (SWCNTs) may be 1 nm to 20 nm, and specifically 1.5 nm to 15 nm. More specifically, the average diameter of the single-walled carbon nanotubes (SWCNTs) may be 1.5 nm to 5 nm. The single-walled carbon nanotubes (SWCNTs) with such an average diameter have flexible characteristics, so even when physically damaged, the contact between negative electrode active material particles is not easily disconnected. The average diameter of the single-walled carbon nanotubes (SWCNTs) can be calculated as an average value observed by TEM.

A BET specific surface area of the single-walled carbon nanotube may be 200 m²/g to 2,000 m²/g, and specifically 250 m²/g to 1,500 m²/g. When single-walled carbon nanotubes (SWCNTs) satisfying the above range are used, even a small amount of conductive material can make it easy to disperse and effectively connect particles.

The single-walled carbon nanotube (SWCNT) may be included in an amount of 0.01 to 3 parts by weight, specifically 0.01 to 2 parts by weight, 0.01 to 1 part by weight, or 0.05 to 0.5 part by weight based on a total of 100 parts by weight of the negative electrode composition. When the above range is satisfied, the connection of conductive paths between active material particles is facilitated, while minimizing electrolyte solution side reactions due to high specific surface area.

In the present specification, the specific surface area is measured by the BET method, and specifically, can be measured by performing degassing for a measurement target at 130°C for 2 hours using a BET measuring apparatus (BEL-SORP-mini, Nippon Bell), and performing N₂ adsorption/desorption at 77 K.

According to an exemplary embodiment, the negative electrode composition further includes a binder.

The binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

An exemplary embodiment of the present invention provides a negative electrode including the negative electrode composition according to the exemplary embodiments described above.

Specifically, the negative electrode may include a negative electrode current collector and a negative electrode active material layer arranged on the negative electrode current collector. The negative electrode active material layer includes the negative electrode composition according to the exemplary embodiments described above.

The negative electrode active material layer may be formed by applying a negative electrode slurry including the negative electrode composition described above to at least one surface of a negative electrode current collector, and drying and roll-pressing the same.

The negative electrode current collector is not particularly limited as long as it has conductivity without causing a chemical change in the battery. For example, for the current collector, copper, stainless steel, aluminum, nickel, titanium, fired carbon, aluminum or stainless steel each surface-treated with carbon, nickel, titanium, silver, or the like, or the like may be used. Specifically, transition metals that adsorb carbon well, such as copper and nickel, may be used for the current collector. A thickness of the current collector may be 6 µm to 20 µm. However, the thickness of the current collector is not limited thereto.

If necessary, an additional conductive material may be included, in addition to the single-walled carbon nanotube described above. The additional conductive material is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; a conductive fiber such as a carbon fiber and a metal fiber; a conductive tube such as a carbon nanotube; fluorocarbon powder, metal powder such as aluminum powder and nickel powder; a conductive whisker such as zinc oxide and potassium titanate; a conductive metal oxide such as titanium oxide; a conductive material such as a polyphenylene derivative, and the like may be used.

The negative electrode slurry may include a solvent for negative electrode slurry formation. Specifically, the solvent for negative electrode slurry formation may include at least one selected from the group consisting of distilled water, ethanol, methanol, and isopropyl alcohol, and specifically, distilled water, in terms of facilitating dispersion of components.

An exemplary embodiment of the present invention provides a lithium secondary battery including the negative electrode according to the above-described exemplary embodiment, a positive electrode, and a separator.
The positive electrode may include a positive electrode current collector and a positive electrode active material layer formed on the positive electrode current collector and including the positive electrode active material.

In the positive electrode, the positive electrode current collector is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector may typically have a thickness of 3 to 500 µm, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide (LiCoO₂) and a lithium nickel oxide (LiNiO₂), or a compound substituted with one or more transition metals; a lithium iron oxide such as LiFe₃O₄; a lithium manganese oxide such as chemical formula Li_{1+c1}Mn_{2-c1}O₄ (0≤c1≤0.33), LiMnO₃, LiMn₂O₃ and LiMnO₂; a lithium copper oxide (Li₂CuO₂); a vanadium oxide such as LiV₃O₈, V₂O₅ and Cu₂V₂O₇; a Ni-site type lithium nickel oxide represented by chemical formula LiNi_{1-c2}M_{c2}O₂ (where M is at least one selected from the group consisting of Co, Mn, Al, Cu, Fe, Mg, B, and Ga, and satisfies 0.01≤c2≤0.3); a lithium manganese composite oxide represented by chemical formula LiMn_{2-c3}M_{c3}O₂ (where M is at least one selected from the group consisting of Co, Ni, Fe, Cr, Zn, and Ta, and satisfies 0.01≤c3≤0.1) or Li₂Mn₃MO₈ (where M is at least one selected from the group consisting of Fe, Co, Ni, Cu, and Zn); LiMn₂O₄ in which a part of Li of the chemical formula is substituted with an alkaline earth metal ion, or the like, but is not limited thereto. The positive electrode may be Li metal.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery to be constituted. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesive force between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

The separator serves to separate the negative electrode and the positive electrode and to provide a migration path of lithium ions, in which any separator may be used as the separator without particular limitation as long as it is typically used in a secondary battery, and particularly, a separator having high moisture-retention ability for an electrolyte solution as well as a low resistance to the movement of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a usual porous non-woven fabric, for example, a non-woven fabric formed of high melting point glass fibers, polyethylene terephthalate fibers, or the like may be used. Furthermore, a coated separator including a ceramic component or polymer material may be used so as to secure heat resistance or mechanical strength, and a separator having a single layer or multilayer structure may be selectively used.

The lithium secondary battery may further include an electrolyte. Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, such a combined use may be more preferable.

A lithium salt may be used as the metal salt, and the lithium salt is a material that is readily soluble in the non-aqueous electrolyte solution, in which, for example, one or more selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving life characteristics of the battery, suppressing a decrease in battery capacity, improving discharge capacity of the battery, and the like, in addition to the above-described electrolyte components.

Another exemplary embodiment of the present invention provides a battery module including the secondary battery as a unit cell, and a battery pack including the same.

Another exemplary embodiment of the present invention, there is provided a battery pack including the secondary battery. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Hereinafter, Examples will be described in detail to specifically describe the present specification. However, the Examples according to the present specification may be modified in other forms, and the scope of the present application is not construed as being limited to the following Examples. The Examples of the present application are provided to more completely explain the present specification to one skilled in the art.

### Mode for Invention

### Example 1 (silicon-carbon composite 1, artificial graphite 2, natural graphite 2)

### [Preparation of Silicon-Carbon Composite 1]

The cellulose powder was put into a tubular electric furnace, and then heated under a nitrogen atmosphere for 2 hours after increasing the temperature to 400°C at a rate of 4°C/min. Thereafter, after the temperatures of the electric furnace was increased to 900°C at a rate of 4°C/min, the cellulose powder was heated under a nitrogen atmosphere for 2 hours. After mixing the above powder with sulfuric acid and nitric acid at a volume ratio of 3:1, the mixture was stirred at 60°C for 2 hours, and centrifuged to obtain precipitates. The obtained powder was washed five times with a solvent in which ethanol and distilled water were mixed at a volume ratio of 1:3, and then dried at 120°C for 12 hours. The carbon-based particles were put into a KOH solvent, which was then heated under a nitrogen atmosphere at 800°C for 2 hours to obtain a porous carbon structure. After washing the porous carbon structure three times with distilled water and then dried at 120°C for 12 hours or longer. The porous carbon structure was put into a horizontal electric furnace and processed by causing SiH₄/He (=5/95) gas to flow at a flow rate of 50 ml/min at 700°C for 1 hour, resulting in preparation of a silicon-carbon composite. Thereafter, the silicon-carbon composite was put into an electric furnace and subjected to a reaction for 2 hours by causing methane to flow at 700°C, resulting in preparation of a silicon-carbon composite 1 including a carbon layer on a surface.

### [Preparation of Artificial Graphite 2]

Green coke particles, calcined coke particles, and petroleum-based pitch binder were put into the reactor. The green coke particles and the calcined coke particles were mixed at a weight ratio of 30:70. The pitch binder was mixed at 7 wt% based on the total weight of the green coke particles, the calcined coke particles, and the petroleum-based pitch. The mixture of the green coke particles, the calcined coke particles, and the petroleum-based pitch was graphitized by heat treatment at 3000°C for 50 hours, resulting in preparation of artificial graphite particles in the form of secondary particles in which primary particles were combined. The artificial graphite particles in the form of secondary particles and the petroleum-based pitch were mixed and heat-treated in a roller hearth kiln at 1250°C to form an amorphous carbon coating layer on the surfaces of artificial graphite particles, resulting in preparation of artificial graphite 2. The D₅₀ of the final artificial graphite 2 was controlled to be at the level of 16 µm.

### [Preparation of Natural Graphite 2]

Natural graphite raw material was extracted from graphite ore through flotation. The natural graphite was treated with acid or base in order to remove impurities from the natural graphite, and washed and dried to prepare flake natural graphite. The obtained flake natural graphite was spheroidized using a vortex flow pulverizer, treated with sulfuric acid in order to remove impurities, and dried to prepare spherical natural graphite. The spherical natural graphite was filled into a mold, pressurized through cold isostatic pressing (CIP), and then crushed. During the pressurization, the pressurizing pressure was 90 MPa and the pressurizing time was 15 minutes. The pressurized spherical natural graphite and pitch were mixed, and the mixture was heat-treated at 1,300°C for 24 hours under an inert atmosphere in a dry process to form an amorphous carbon coating layer on the spherical natural graphite, resulting in preparation of natural graphite 2. The carbon coating layer was formed at 5 wt% of the total weight of the natural graphite active material.

### [Preparation of Slurry]

As a negative electrode active material, the silicon-carbon composite 1, the natural graphite 2, and the artificial graphite 2 having the rolling densities and electrical conductivities shown in Table 1 below were used at a weight ratio of 15:15:70. Specifically, when measuring a powder resistance at a pressure of 800 kgf/cm², the silicon-carbon composite 1 has the rolling density of 0.859 g/cc and the electrical conductivity of 0.664 S/cm, the natural graphite 2 has values of 1.6 g/cc and 337 S/cm, respectively, and the artificial graphite 2 has values of 1.58 g/cc and 96.6 S/cm, respectively. A negative electrode slurry was prepared by mixing the negative electrode active material, conductive agent (carbon black, single-walled carbon nanotube (SWCNT)), and binder (CMC (carboxymethyl cellulose), SBR (styrene-butadiene rubber)) at a weight ratio of 95.3:1:3.7.

### [Preparation of Negative Electrode]

The negative electrode slurry was applied to a Cu metal thin film with a thickness of about 20 µm, which was then dried at a circulating air temperature of 60°C. Then, the thin film was roll-pressed, dried in a vacuum oven of 130°C for about a day, and punched into a circular shape of 1.4875 cm² to prepare a negative electrode.

### [Preparation of Secondary Battery]

A Li metal thin film punched to be 1.7671 cm² was used as a positive electrode. A Li coin half cell was prepared by interposing a porous polyethylene separator between the positive electrode and the negative electrode and injecting an electrolyte solution in which 1M LiPF₆ was dissolved in a mixed solution prepared by mixing EC (ethylene carbonate) and EMC (ethyl methyl carbonate) at a mixing ratio of 3:7 and an additive was included.

### Example 2 (silicon oxide 1, artificial graphite 2, natural graphite 2)

### [Production of Silicon Oxide 1]

SiO formed by mixing Si and SiO₂at a molar ratio of 1:1 was placed in crucible No. 1, heated to a sublimation temperature of 1,400°C, and evaporated. Metal magnesium was placed in crucible No. 2, separately heated at 800°C, and evaporated. All of the crucibles were depressurized to be at the level of 0.1 torr, and then raw materials were evaporated. The vaporous mixture containing Mg was reacted for 6 hours, and then condensed to a solid phase in a vacuum region of 800°C. The silicon-based active material prepared by the above method was pulverized using a ball mill for about 3 to 4 hours. Then, a magnesium silicon oxide active material having a carbon layer coated thereon was prepared by reacting the pulverized silicon-based active material with methane (CH4) by 1 L/min at 0.1 torr for about 5 hours under an inert gas, Ar atmosphere using a CVD apparatus to form a carbon layer on a surface of the silicon-based active material. The D₅₀ of the final active material was controlled to be at the level of 6 µm.

### [Preparation of Slurry]

A slurry was prepared in the same manner as in Example 1, except that, as a negative electrode active material, the silicon oxide 1, the natural graphite 2 (see the preparation method of Example 1), and the artificial graphite 2 (see the preparation method of Example 1) having the rolling densities and electrical conductivities shown in Table 1 below were used at a weight ratio of 20:10:70. Specifically, when measuring a powder resistance at a pressure of 800 kgf/cm², the silicon oxide 1 has the rolling density of 1.42 g/cc and the electrical conductivity of 0.122 S/cm, the natural graphite 2 has values of 1.6 g/cc and 337 S/cm, respectively, and the artificial graphite 2 has values of 1.58 g/cc and 96.6 S/cm, respectively.

### [Preparation of Negative Electrode and Secondary Battery]

Using the above slurry, a negative electrode and a secondary battery were prepared in the same manner as in Example 1.

### Example 3 (silicon-carbon composite 2, artificial graphite 1, natural graphite 1)

### [Preparation of Silicon-Carbon Composite 2]

A silicon-carbon composite was heat-treated at 700°C for 2 hours in an atmosphere of O₂/Ar (= 5/95) to form an oxide layer. A silicon-carbon composite 2 was prepared in the same manner as in Example 1, except that the silicon-carbon composite was placed in the electric furnace and subjected to a reaction for 2 hours by causing methane to flow at 700°C, thereby forming a carbon layer on a surface.

### [Preparation of Artificial Graphite 1]

The pitch binder was mixed at 4.5 wt% based on the total weight of the green coke particles, the calcined coke particles, and the petroleum-based pitch. An artificial graphite active material was prepared in the same manner as in the artificial graphite 2 of Example 1, except that the artificial graphite particles in the form of secondary particles and the petroleum-based pitch were mixed and heat-treated in a roller hearth kiln at 1150°C to form an amorphous carbon coating layer on the surfaces of artificial graphite particles.

### [Preparation of Natural Graphite 1]

A natural graphite active material was prepared in the same manner as in the natural graphite 2 of Example 1, except that the pressurized spherical natural graphite and pitch were mixed, and the mixture was heat-treated at 1,100°C for 24 hours in an inert atmosphere in a dry process, thereby forming an amorphous carbon coating layer.

### [Preparation of Slurry]

A slurry was prepared in the same manner as in Example 1, except that, as a negative electrode active material, the silicon-carbon composite 2, the natural graphite 1, and the artificial graphite 1 having the rolling densities and electrical conductivities shown in Table 1 below were used at a weight ratio of 15:15:70. Specifically, the slurry is a composition in which when measuring a powder resistance at a pressure of 800 kgf/cm², the silicon-carbon composite 2 has the rolling density of 0.914 g/cc and the electrical conductivity of 0.00025 S/cm, the natural graphite 1 has values of 1.61 g/cc and 149 S/cm, respectively, and the artificial graphite 1 has values of 1.54 g/cc and 30.1 S/cm, respectively.

### [Preparation of Negative Electrode and Secondary Battery]

Using the above slurry, a negative electrode and a secondary battery were prepared in the same manner as in Example 1.

### Example 4 (silicon-carbon composite 1, artificial graphite 1, natural graphite 2)

### [Preparation of Slurry]

A slurry was prepared in the same manner as in Example 1, except that, as a negative electrode active material, the silicon-carbon composite 1 (see the preparation method of Example 1), the natural graphite 2 (see the preparation method of Example 1), and the artificial graphite 1 (see the preparation method of Example 3) having the rolling densities and electrical conductivities shown Table 1 below were used at a weight ratio of 15:15:70. Specifically, the slurry is a composition in which when measuring a powder resistance at a pressure of 800 kgf/cm², the silicon-carbon composite 1 has the rolling density of 0.859 g/cc and the electrical conductivity of 0.664 S/cm, the natural graphite 2 has values of 1.6 g/cc and 337 S/cm, respectively, and the artificial graphite 1 has values of 1.54 g/cc and 30.1 S/cm, respectively.

### [Preparation of Negative Electrode and Secondary Battery]

Using the above slurry, a negative electrode and a secondary battery were prepared.

### Example 5 (silicon oxide 1, artificial graphite 1, natural graphite 2)

### [Preparation of Slurry]

A slurry was prepared in the same manner as in Example 1, except that, as a negative electrode active material, the silicon oxide 1 (see the preparation method of Example 2), the natural graphite 2 (see the preparation method of Example 1), and the artificial graphite 1 (see the preparation method of Example 3) having the rolling densities and electrical conductivities shown Table 1 below were used at a weight ratio of 20:10:70. Specifically, the slurry is a composition in which when measuring a powder resistance at a pressure of 800 kgf/cm², the silicon oxide active material has the rolling density of 1.42 g/cc and the electrical conductivity of 0.122 S/cm, the natural graphite 2 has values of 1.6 g/cc and 337 S/cm, respectively, and the artificial graphite 1 has values of 1.54 g/cc and 30.1 S/cm, respectively.

### [Preparation of Negative Electrode]

Using the above slurry, a negative electrode and a secondary battery were prepared in the same manner as in Example 1.

### Example 6 (silicon oxide 1, artificial graphite 2, natural graphite 1)

### [Preparation of Slurry]

A slurry was prepared in the same manner as in Example 1, except that, as a negative electrode active material, the silicon oxide 1 (see the preparation method of Example 2), the natural graphite 1 (see the preparation method of Example 3), and the artificial graphite 2 (see the preparation method of Example 1) having the rolling densities and electrical conductivities shown Table 1 below were used at a weight ratio of 20:10:70. The slurry is a composition in which when measuring a powder resistance at a pressure of 800 kgf/cm², the silicon oxide active material has the rolling density of 1.42 g/cc and the electrical conductivity of 0.122 S/cm, the natural graphite 1 has values of 1.61 g/cc and 149 S/cm, respectively, and the artificial graphite 2 has values of 1.58 g/cc and 96.6 S/cm, respectively.

### [Preparation of Negative Electrode and Secondary Battery]

Using the above slurry, a negative electrode and a secondary battery were prepared in the same manner as in Example 1.

### Example 7 (silicon oxide 1, artificial graphite 2, natural graphite 2)

### [Preparation of Slurry]

A slurry was prepared in the same manner as in Example 1, except that, as a negative electrode active material, the silicon oxide 1 (see the preparation method of Example 2), the natural graphite 2 (see the preparation method of Example 1), and the artificial graphite 2 (see the preparation method of Example 1) having the rolling densities and electrical conductivities shown Table 1 below were used at a weight ratio of 20:10:70. When measuring a powder resistance at a pressure of 800 kgf/cm², the silicon oxide active material has the rolling density of 1.42 g/cc and the electrical conductivity of 0.122 S/cm, the natural graphite 2 has values of 1.6 g/cc and 337 S/cm, respectively, and the artificial graphite 2 has values of 1.58 g/cc and 96.6 S/cm, respectively. A negative electrode slurry was prepared by mixing the negative electrode active material, conductive material (carbon black), and binder (CMC (carboxymethyl cellulose) and SBR (styrene-butadiene rubber)) at a weight ratio of 95.3:1:3.7.

### [Preparation of Negative Electrode and Secondary Battery]

Using the above slurry, a negative electrode and a secondary battery were prepared in the same manner as in Example 1.

### Comparative Example 1 (silicon-carbon composite 3, artificial graphite 3, natural graphite 2)

### [Preparation of Silicon-Carbon Composite 3]

Carbon-based particles prepared by the method for manufacturing a silicon-carbon composite as specified in Example 1 were processed by causing SiH₄/He (=5/95) gas to flow at a flow rate of 50 ml/min at 700°C for 1 hour, resulting in preparation of a silicon-carbon composite. Then, the silicon-carbon composite was put into a solvent in which phosphoric acid and ethanol were mixed at a volume ratio of 10:90. The silicon-carbon composite dispersed in the solvent was heated at 1000°C for 4 hours in an argon atmosphere to obtain a final P (phosphorus)-doped silicon-carbon composite. Thereafter, the P-doped silicon-carbon composite was put into an electric furnace and subjected to a reaction for 2 hours by causing methane to flow at 700°C, resulting in preparation of a P-doped silicon-carbon composite negative electrode active material having a carbon layer on a surface.

### [Preparation of Artificial Graphite 3]

An artificial graphite 3 was prepared in the same manner as in the artificial graphite 2 of Example 1, except that a mixture of green coke particles, calcined coke particles, and petroleum-based pitch was graphitized by heat treatment at 3000°C for 50 hours to prepare artificial graphite particles in the form of secondary particles, and then the artificial graphite particles were partially oxidized in a hot zone by heat treatment at 800°C for 2 hours in an atmosphere of O₂/Ar (= 5/95).

### [Preparation of Slurry]

A slurry was prepared in the same manner as in Example 1, except that, as a negative electrode active material, the silicon-carbon composite 3, the natural graphite 2 (see the preparation method of Example 1), and the artificial graphite 3 having the rolling densities and electrical conductivities shown in Table 1 below were used at a weight ratio of 20:10:70. Specifically, the slurry is a composition in which when measuring a powder resistance at a pressure of 800 kgf/cm², the silicon-carbon composite 3 has the rolling density of 1.32 g/cc and the electrical conductivity of 8.1 S/cm, the natural graphite 2 has values of 1.6 g/cc and 337 S/cm, respectively, and the artificial graphite 3 has values of 1.56 g/cc and 5.8 S/cm, respectively.

### [Preparation of Negative Electrode and Secondary Battery]

Using the above slurry, a negative electrode and a secondary battery were prepared in the same manner as in Example 1.

### Comparative Example 2 (silicon oxide 2, artificial graphite 4, natural graphite 1)

### [Production of Silicon Oxide 2]

A silicon oxide 2 was prepared in the same manner as in the silicon oxide 1 of Example 2, except that the silicon-based active material was pulverized using a ball mill for about 5 to 6 hours to control D₅₀ to be at a level of 3 µm.

### [Preparation of Artificial Graphite 4]

An artificial graphite 4 was prepared in the same manner as in the artificial graphite 2 of Example 1, except that D₅₀ of the final artificial graphite active material was 29 µm.

### [Preparation of Slurry]

A slurry was prepared in the same manner as in Example 1, except that, as a negative electrode active material, the silicon oxide 2, the natural graphite 1 (see the preparation method of Example 3), and the artificial graphite 4 having the rolling densities and electrical conductivities shown in Table 1 below were used at a weight ratio of 20:10:70. Specifically, the slurry is a composition in which when measuring a powder resistance at a pressure of 800 kgf/cm², the silicon oxide 2 has the rolling density of 1.52 g/cc and the electrical conductivity of 0.178 S/cm, the natural graphite 1 has values of 1.61 g/cc and 149 S/cm, respectively, and the artificial graphite 4 has values of 1.45 g/cc and 80.2 S/cm, respectively.

### [Preparation of Negative Electrode and Secondary Battery]

Using the above slurry, a negative electrode and a secondary battery were prepared in the same manner as in Example 1.

### Comparative Example 3 (silicon oxide 1, artificial graphite 1, natural graphite 3)

### [Preparation of Natural Graphite 3]

A natural graphite was prepared in the same manner as in the natural graphite 2 of Example 1, except that a natural graphite active material had the carbon coating layer formed at 2 wt% based on the total weight of the natural graphite active material.

### [Preparation of Slurry]

A slurry was prepared in the same manner as in Example 1, except that, as a negative electrode active material, the silicon oxide 1 (see the preparation method of Example 2), the natural graphite 3, and the artificial graphite 1 (see the preparation method of Example 3) having the rolling densities and electrical conductivities shown Table 1 below were used at a weight ratio of 20:10:70. Specifically, the slurry is a composition in which when measuring a powder resistance at a pressure of 800 kgf/cm², the silicon oxide 1 has the rolling density of 1.42 g/cc and the electrical conductivity of 0.122 S/cm, the natural graphite 3 has values of 1.6 g/cc and 24.5 S/cm, respectively, and the artificial graphite 1 has values of 1.54 g/cc and 30.1 S/cm, respectively.

### [Preparation of Negative Electrode and Secondary Battery]

Using the above slurry, a negative electrode and a secondary battery were prepared in the same manner as in Example 1.

**[Table 1]**

| | Rolling density (g/cc) | Electrical Conductivity (S/cm) |
|---|---|---|
| Natural graphite 1 | 1.61 | 149 |
| Natural graphite 2 | 1.6 | 337 |
| Natural graphite 3 | 1.6 | 24.5 |
| Artificial graphite 1 | 1.54 | 30.1 |
| Artificial graphite 2 | 1.58 | 96.6 |
| Artificial graphite 3 | 1.56 | 5.8 |
| Artificial graphite 4 | 1.45 | 80.2 |
| Silicon oxide 1 | 1.42 | 0.122 |
| Silicon oxide 2 | 1.52 | 0.178 |
| Silicon-carbon composite 1 | 0.859 | 0.664 |
| Silicon-carbon composite 2 | 0.914 | 0.00025 |
| Silicon-carbon composite 3 | 1.32 | 8.1 |

The rolling densities and electrical conductivities of the active materials used in the Examples and the Comparative Examples are shown in Tables 2 and 3 below.

**[Table 2]**

| | Type of active material | | | Rolling density (g/cc) | | | Electrical conductivity (S/cm) | | |
|---|---|---|---|---|---|---|---|---|---|
| | Silicon-based active material | Artificial graphite | Natural graphite | Silicon-based active material | Artificial graphite | Natural graphite | Silicon-based active material | Artificial graphite | Natural graphite |
| Example 1 | Silicon-carbon composite 1 | Artificial graphite 2 | Natural graphite 2 | 0.859 | 1.58 | 1.6 | 0.664 | 96.6 | 337 |
| Example 2 | Silicon oxide 1 | Artificial graphite 2 | Natural graphite 2 | 1.42 | 1.58 | 1.6 | 0.122 | 96.6 | 337 |
| Example 3 | Silicon-carbon composite 2 | Artificial graphite 1 | Natural graphite 1 | 0.914 | 1.54 | 1.61 | 0.00025 | 30.1 | 149 |
| Example 4 | Silicon-carbon composite 1 | Artificial graphite 1 | Natural graphite 2 | 0.859 | 1.54 | 1.6 | 0.664 | 30.1 | 337 |
| Example 5 | Silicon oxide 1 | Artificial graphite 1 | Natural graphite 2 | 1.42 | 1.54 | 1.6 | 0.122 | 30.1 | 337 |
| Example 6 | Silicon oxide 1 | Artificial graphite 2 | Natural graphite 1 | 1.42 | 1.58 | 1.61 | 0.122 | 96.6 | 149 |
| Example 7 | Silicon oxide 1 | Artificial graphite 2 | Natural graphite 2 | 1.42 | 1.58 | 1.6 | 0.122 | 96.6 | 337 |
| Comparative Example 1 | Silicon-carbon composite 3 | Artificial graphite 3 | Natural graphite 2 | 1.32 | 1.56 | 1.6 | 8.1 | 5.8 | 337 |
| Comparative Example 2 | Silicon oxide 2 | Artificial graphite 4 | Natural graphite 1 | 1.52 | 1.45 | 1.61 | 0.178 | 80.2 | 149 |
| Comparative Example 3 | Silicon oxide 1 | Artificial graphite 1 | Natural graphite3 | 1.42 | 1.54 | 1.6 | 0.122 | 30.1 | 24.5 |

**[Table 3]**

| | Rolling density ratio | | Electrical conductivity Ratio | |
|---|---|---|---|---|
| | Artificial graphite/silicon-based active material | Natural graphite/ artificial graphite | Artificial graphite/silicon-based active material | Natural graphite/ artificial graphite |
| Example 1 | 1.84 | 1.01 | 145.48 | 3.49 |
| Example 2 | 1.11 | 1.01 | 791.80 | 3.49 |
| Example 3 | 1. 68 | 1.05 | 120,400.00 | 4.95 |
| Example 4 | 1.79 | 1.04 | 45.33 | 11.20 |
| Example 5 | 1.08 | 1.04 | 246.72 | 11.20 |
| Example 6 | 1.11 | 1.02 | 791.80 | 1.54 |
| Comparative Example 1 | 1.18 | 1.03 | 0.72 | 58.10 |
| Comparative Example 2 | 0.95 | 1.11 | 450.56 | 1.86 |
| Comparative Example 3 | 1.08 | 1.04 | 246.72 | 0.81 |

### <Experimental Example: Evaluation of discharge capacity, initial efficiency, and life (capacity retention rate) characteristics>

Batteries were prepared using the negative electrodes of the Examples and the Comparative Examples, respectively.

A lithium (Li) metal thin film cut into a circular shape of 1.7671 cm² was used as a positive electrode. A porous polyethylene separator was interposed between the positive electrode and the negative electrode, and an electrolyte solution obtained by dissolving vinylene carbonate to 0.5 part by weight in a mixed solution in which ethyl methyl carbonate (EMC) and ethylene carbonate (EC) were mixed in a volume ratio of 7:3, and dissolving LiPF₆ to a concentration of 1M was injected to prepare a lithium coin half-cell.

The prepared batteries were charged and discharged to evaluate discharge capacity, initial efficiency, and capacity retention rate, and the evaluation results are shown in Table 4 below.

The charging and discharging were performed at 0.1C for the first cycle and the second cycle, and the charging and discharging were performed at 0.5C from the third cycle to the 299th cycle. At the 50th cycle, the charging and discharging were terminated in a charge state (with lithium contained in the negative electrode).
Charging conditions: CC (constant current)/CV (constant voltage) (5 mV/0.005 C current cut-off)
Discharging conditions: CC (constant current) condition 1.5V

The discharge capacity (mAh/g) and the initial efficiency (%) were derived from the result after charging and discharging once. Specifically, the initial efficiency (%) was derived by the following calculation. Initial efficiency (%) = (first time discharge capacity/first time charge capacity) × 100(%)

The capacity retention rate was derived by the following calculation. Capacity retention rate (%) = (299 times discharge capacity/first time discharge capacity) × 100(%)

**[Table 4]**

| Battery | Discharge capacity (mAh/g) | Initial efficiency (%) | Capacity retention rate (%) |
|---|---|---|---|
| Example 1 | 504 | 91.3 | 88.0 |
| Example 2 | 504 | 88.1 | 86.5 |
| Example 3 | 504 | 91.0 | 87.7 |
| Example 4 | 504 | 90.6 | 85.1 |
| Example 5 | 504 | 87.7 | 84.9 |
| Example 6 | 504 | 87.6 | 85.5 |
| Example 7 | 504 | 86.5 | 84.1 |
| Comparative Example 1 | 504 | 86.1 | 80.1 |
| Comparative Example 2 | 504 | 84.8 | 71.9 |
| Comparative Example 3 | 504 | 85.6 | 83.6 |

In Comparative Example 1, the electrical conductivity of the silicon-based active material was higher than that of artificial graphite, and in this case, low initial efficiency and capacity retention rate characteristics were exhibited. It is known that silicon-based active materials react more severely with electrolyte solutions than carbon-based active materials due to their unstable surfaces. When the electrical conductivity of the silicon-based active material becomes higher than that of artificial graphite, the reduction reaction of the electrolyte solution is promoted on the surface of the silicon-based active material, forming a thick film, resulting in low efficiency and capacity retention rate.

In addition, in Comparative Example 2, the rolling density of artificial graphite was lower than that of the silicon-based active material, and in this case, low initial efficiency and capacity retention rate characteristics were exhibited. The rolling density refers to how densely the carbon-based active material and the silicon-based active material are present during electrode rolling, enabling migration pathways of electrons and lithium. When the rolling density of the silicon-based active material is higher than that of artificial graphite, the silicon-based active material undergoes significant volume change as the cycle progresses, leading to formation of larger pores and resulting in inferior capacity retention rate characteristics. In Comparative Example 3, the electrical conductivity of natural graphite was lower than that of artificial graphite, and in this case as well, low initial efficiency and capacity retention rate characteristics were exhibited. On the other hand, Examples 1 to 7 exhibited high initial efficiency and capacity retention rate by using the active materials satisfying the relationship between the rolling density and electrical conductivity of the present invention.

In particular, Examples 1 to 3, in which the electrical conductivity of the artificial graphite is 10² times or greater than that of the silicon-based active material, and the electrical conductivity of the natural graphite is 2 times or greater than that of the artificial graphite, the rolling density of the artificial graphite is 1.1 times or greater than that of the silicon-based active material, and the rolling density of the natural graphite is 1.01 times or greater than that of the artificial graphite, exhibited superior initial efficiency and capacity retention rate.

## Claims

1. A negative electrode composition comprising a negative electrode active material comprising a silicon-based active material and a carbon-based active material, the silicon-based active material comprising at least one of a silicon-carbon composite and a silicon oxide,
wherein the carbon-based active material comprises natural graphite and artificial graphite, and
wherein when measuring a powder resistance at a pressure of 800 kgf/cm², a rolling density decreases in order of natural graphite > artificial graphite > silicon-based active material, and an electrical conductivity decreases in order of natural graphite > artificial graphite > silicon-based active material.

2. The negative electrode composition of claim 1, wherein the electrical conductivity of the artificial graphite is 10² times or greater than that of the silicon-based active material, and the electrical conductivity of the natural graphite is 2 times or greater than that of the artificial graphite.

3. The negative electrode composition of claim 1, wherein the rolling density of the artificial graphite is 1.1 times or greater than that of the silicon-based active material, and the rolling density of the natural graphite is 1.01 times or greater than that of the artificial graphite.

4. The negative electrode composition of claim 1, wherein the electrical conductivity is 50 to 10,000 S/cm for the natural graphite, 15 to 2,000 S/cm for the artificial graphite, 0.0001 to 2 S/cm for the silicon-carbon composite, and 0.001 to 1 S/cm for the silicon oxide.

5. The negative electrode composition of claim 1, wherein the rolling density is 1.4 to 2.5 g/cc for the natural graphite, 1.0 to 2.2 g/cc for the artificial graphite, 0.5 to 1.2 g/cc for the silicon-carbon composite, and 0.8 to 1.8 g/cc for the silicon oxide.

6. The negative electrode composition of claim 1, wherein the negative electrode composition comprises a single-walled carbon nanotube as a conductive material.

7. The negative electrode composition of claim 6, wherein the silicon-based active material is included in an amount of 0.5 to 52 parts by weight, the carbon-based active material is included in an amount of 45 to 99 parts by weight, and the single-walled carbon nanotube is included in an amount of 0.01 to 3 parts by weight, based on 100 parts by weight of the negative electrode composition, and
wherein the natural graphite is included in an amount of 10 to 70 parts by weight, and the artificial graphite is included in an amount of 30 to 90 parts by weight, based on 100 parts by weight of the carbon-based active material.

8. The negative electrode composition of claim 1, further comprising a binder.

9. A negative electrode comprising the negative electrode composition of any one of claims 1 to 8.

10. A lithium secondary battery comprising:
the negative electrode of claim 9;
a positive electrode; and
a separator.

11. A battery module comprising the lithium secondary battery of claim 10.

12. A battery pack comprising the lithium secondary battery of claim 10.

13. A battery pack comprising the battery module of claim 11.
